# EUROPEAN PATENT APPLICATION

(11) **EP 4 537 726 A1**
(43) Date of publication of application: **16.04.2025**
(21) Application number: 22945594.4
(22) Date of filing: 02.12.2022
(51) Int. Cl.: A47L 11/28, A47L 11/40, G05D 1/02

(54) **CLIFF SENSOR AND SELF-MOVING DEVICE**

(30) Priority: 10.06.2022 CN 202210655181
(71) Applicant: Beijing Roborock Technology Co., Ltd., Beijing 102206 (CN)
(72) Inventor: DANG, Liang, Beijing 102206 (CN); YU, Mochen, Beijing 102206 (CN); SUN, Hongyong, Beijing 102206 (CN); CHEN, Ze, Beijing 102206 (CN); LIU, Dan, Beijing 102206 (CN)
(74) Representative: Studio Torta S.p.A.
(86) International application number: PCT/CN2022/136221
(87) International publication number: WO 2023/236466

(57) **Abstract**

A cliff sensor and a self-moving device. The cliff sensor comprises an optical emitter (1231) and an optical receiver (1232), an emission light path of the optical emitter (1231) being provided with a first convex lens (1233), a partition plate (1235) being arranged between the optical emitter (1231) and the optical receiver (1232), a portion on the first convex lens (1233) close to the partition plate (1235) being provided with a first total-reflection structure, the first total-reflection structure being used for totally reflecting first light rays, and the first light rays being part of light rays emitted by the optical emitter (1231) and, in the first convex lens (1233), emitted to the partition plate (1235).

## Description

### CROSS REFERENCE TO RELATED APPLICATIONS

This disclosure claims priority to Chinese Patent Application No. 202210655181.6 filed on June 10, 2022, the content of which is herein incorporated as part of this disclosure by reference in its entirety.

### TECHNICAL FIELD

The present disclosure relates to the field of sensors, and in particular to a cliff sensor and a self-moving device.

### BACKGROUND

A self-moving device is a machine that moves autonomously and works automatically. In its working environment, the self-moving device often encounters cliffs (such as stairs and thresholds). When the self-moving device encounters a cliff, it may fall off, in which case the self-moving device is prone to getting damaged.

### SUMMARY

A series of concepts in a simplified form are introduced in the Summary of the Invention section, and these concepts will be further described in detail in the Detailed Description of the Invention section. The Summary of the Invention section of the present disclosure does not mean to attempt to define the key features and essential technical features of the claimed technical solution, nor does it mean to attempt to determine the scope of protection of the claimed technical solution.

In a first aspect, an embodiment of the present disclosure provides a cliff sensor, including a light emitter and a light receiver, wherein
a first convex lens is provided on a light emitting path of the light emitter, and a partition is provided between the light emitter and the light receiver; and
a first total reflection structure is provided on a portion of the first convex lens close to the partition, and the first total reflection structure is configured to totally reflect first light, the first light being part of light that is emitted by the light emitter and directed to the partition in the first convex lens.

Optionally, a second convex lens is provided on a light receiving path of the light receiver.

Optionally, a second total reflection structure is provided on a portion of the second convex lens close to the partition, and the second total reflection structure is configured to totally reflect second light such that the second light is received by the light receiver, the second light being part of light that is emergent from the first convex lens, reflected by a surface to be operated into the second convex lens and directed to the partition.

Optionally, the first total reflection structure includes a first inclined surface, which is located in a region of the first convex lens close to the partition, the first inclined surface gradually inclines away from the partition from a first end to a second end, the first end is an end of the first inclined surface away from the light emitter, and the second end is an end of the first inclined surface close to the light emitter.

Optionally, the second total reflection structure includes a second inclined surface, which is located in a region on an emergent surface of the second convex lens close to the partition, the second inclined surface gradually inclines away from the partition from a third end to a fourth end, the third end is an end of the second inclined surface away from the light receiver, and the fourth end is an end of the second inclined surface close to the light receiver.

Optionally, the cliff sensor includes a housing, an accommodating chamber is provided in the housing, and the light emitter, the light receiver and the partition are all arranged in the accommodating chamber; and
the first convex lens and the second convex lens are mounted on a bearing wall surface of the housing, and the bearing wall surface is a light-transmitting wall surface, wherein the bearing wall surface is a wall surface of the housing which directly faces emitted light of the light emitter and through which incident light of the light receiver passes.

Optionally, an incident surface of the first convex lens protrudes toward a direction close to the light emitter, and an emergent surface of the first convex lens is a plane; and the emergent surface of the second convex lens protrudes toward a direction of the light receiver, and an incident surface of the second convex lens is a plane.

Optionally, a connector for external connection is further provided in the accommodating chamber, and the connector is connected to the light emitter and the light receiver respectively.

Optionally, a first opening is further provided on the housing at a position corresponding to a plug-in end of the connector, the connector is located at the first opening, and an outer edge of the connector is flush with an edge of the first opening.

Optionally, the connector is provided with a connecting wire, a second opening is provided on the housing at a position corresponding to a connection between the connector and the connecting wire, the connecting wire passes through the second opening, and a blocking member is provided at the second opening to seal the second opening.

Optionally, the housing includes a first shell and a second shell connected to the first shell, such that the accommodating chamber includes a first chamber arranged in the first shell and a second chamber arranged in the second shell, the first convex lens, the second convex lens, the partition, the light receiver and the light emitter are located in the first chamber, and the connector is located in the second chamber.

Optionally, the first shell and the second shell are connected in a fixed or detachable manner.

Optionally, the second shell includes a first sub-shell and a second sub-shell, and the first sub-shell and the second sub-shell are snap-fitted to form the second chamber.

Optionally, the blocking member is made of soft rubber material.

In a second aspect, an embodiment of the present disclosure provides a self-moving device, including a body and the above-mentioned cliff sensor, wherein the cliff sensor is arranged at a bottom of the body.

### BRIEF DESCRIPTION OF DRAWINGS

The following accompanying drawings of the present disclosure are used as part of the embodiments of the present disclosure for understanding the present disclosure. The embodiments of the present invention and their description are shown in the accompanying drawings to explain the principle of the present disclosure.

In the accompanying drawings:
FIG. 1 is a perspective view of a self-moving device according to an optional embodiment of the present disclosure;
FIG. 2 is a bottom view of FIG. 1;
FIG. 3 is a perspective view of a wet cleaning system according to an optional embodiment of the present disclosure;
FIG. 4 is a light path diagram of a light receiver of a cliff sensor according to an optional embodiment of the present disclosure;
FIG. 5 is a light path diagram of a light emitter of a cliff sensor according to an optional embodiment of the present disclosure;
FIG. 6 is a cross-sectional view of a cliff sensor according to an optional embodiment of the present disclosure;
FIG. 7 is a structural diagram of a first shell, a second shell and a connector of a cliff sensor according to an optional embodiment of the present disclosure;
FIG. 8 is a perspective view of a cliff sensor according to an optional embodiment of the present disclosure;
FIG. 9 is a top view of FIG. 8;
FIG. 10 is a cross-sectional view of a cliff sensor according to another optional embodiment of the present disclosure;
FIG. 11 is a perspective view of a cliff sensor according to another optional embodiment of the present disclosure; and
FIG. 12 is a top view of FIG. 11.

Description of reference signs:
sweeping robot, 110-machine body, 111-forward portion, 112-rearward portion, 120-perception module, 121-position determination sensor, 122-front collision structure, 123-cliff sensor, 1231-light emitter, 1232-light receiver, 1233-first convex lens, 12331-first inclined surface, 1234-second convex lens, 12341-second inclined surface, 1235-partition, 1236-accommodating chamber, 12361-first chamber, 12362-second chamber, 1237-connector, 1238-first opening, 1239-housing, 12391-first shell, 12392-second shell, 123921-first sub-shell, 123922-second sub-shell, 12393-bearing wall surface, 12310-second opening, 12311-blocking member, 12312-connecting wire, 130-human-machine interaction module, 140-left wheel, 141-right wheel, 142-driven wheel, 150-cleaning system, 151-dry cleaning system, 152-side brush, 153-wet cleaning system, 1531-cleaning head, 1532-drive unit, 1533-drive platform, 1534-support platform.

### DETAILED DESCRIPTION

In the following description, a large number of specific details are provided for a more thorough understanding of the present disclosure. However, it is apparent to those skilled in the art that the present disclosure can be implemented without one or more of these details. In other examples, some technical features well known in the art are not described in order to avoid confusion with the present disclosure.

It should be noted that the terms used herein are only for the purpose of describing specific embodiments and are not intended to limit exemplary embodiments according to the present disclosure. As used herein, unless otherwise clearly indicated in the context, the singular form is also intended to include the plural form. In addition, it should also be understood that when the terms "comprise" and/or "include" are used in this specification, they indicate the presence of the features, wholes, steps, operations, elements and/or components as stated, and do not exclude the presence or addition of one or more other features, wholes, steps, operations, elements, components and/or their combinations.

Exemplary embodiments according to the present disclosure will be described in more detail with reference to the accompanying drawings. However, these exemplary embodiments can be implemented in a variety of different forms and should not be interpreted as being limited to the embodiments described herein. It should be understood that these embodiments are provided to make the disclosure of the present disclosure thorough and complete, and to fully convey the concepts of these exemplary embodiments to those of ordinary skill in the art.

In order to prevent a self-moving device from falling off, an existing moving device may be provided with a cliff sensor to identify the cliff. In this way, when the cliff sensor identifies the cliff, the self-moving device stops advancing or takes an evasive action, thereby effectively preventing the self-moving device from being damaged due to falling off from a height.

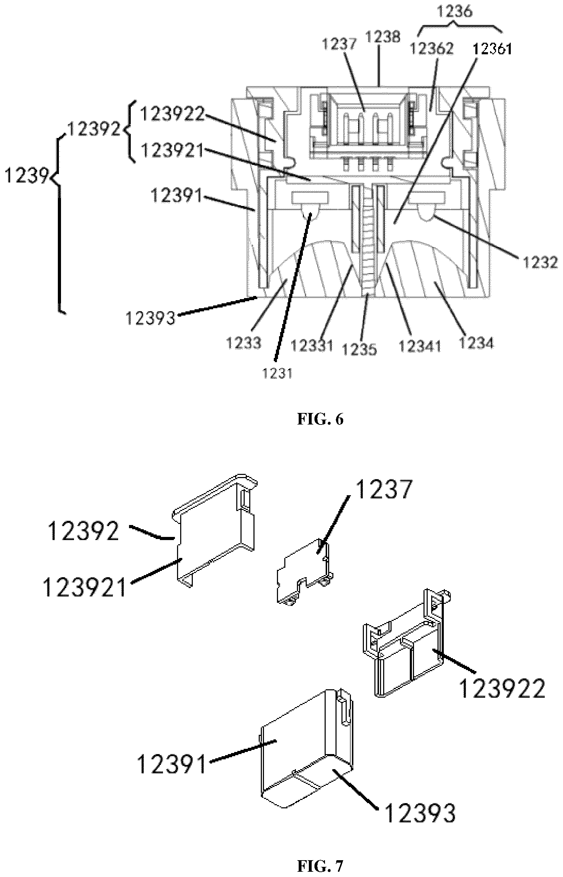

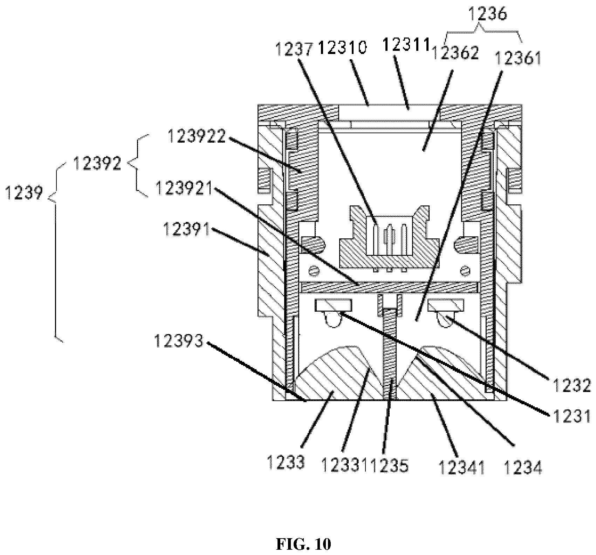

In a first aspect, as shown in FIGS. 6 and 10, an embodiment of the present disclosure provides a cliff sensor. The cliff sensor includes a light emitter 1231 and a light receiver 1232. A first convex lens 1233 is provided on a light emitting path of the light emitter 1231, and a second convex lens 1234 is provided on a light receiving path of the light receiver 1232. A partition 1235 is provided between the first convex lens 1233 and the second convex lens 1234. A first total reflection structure is provided on a portion of the first convex lens 1233 close to the partition 1235, and the first total reflection structure is configured to totally reflect first light such that the first light is emergent from the first convex lens 1233 in a direction approximately parallel to a preset direction. The first light is part of light emitted by the light emitter 1231 and directed to the partition 1235 in the first convex lens 1233, and the preset direction is a direction of a path of light emitted by the light emitter 1231 and converted into approximately parallel light via the first convex lens 1233.

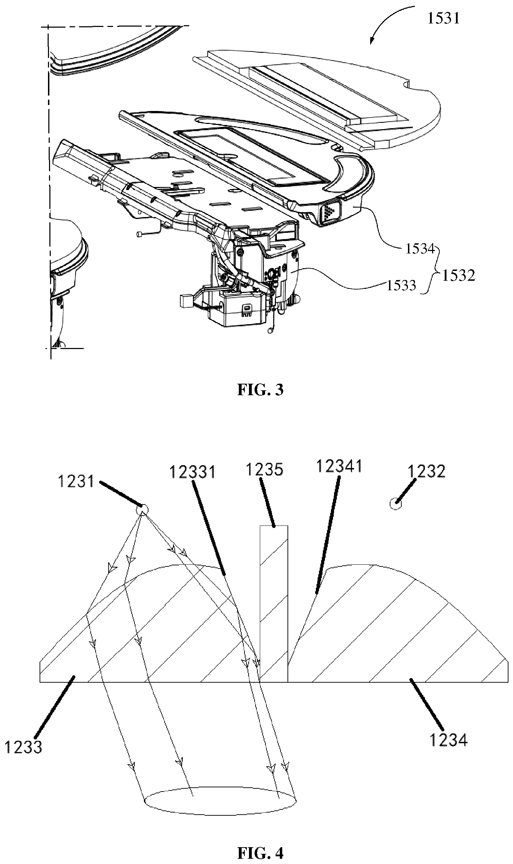

The first convex lens 1233 may be a lens with an incident surface protruding toward a direction close to the light emitter 1231 and an emergent surface being a plane (see FIGS. 4, 5, 6 and 10 for details); or a lens with an incident surface protruding toward a direction close to the light emitter 1231 and an emergent surface protruding toward a direction away from the light emitter 1231. Similarly, the second convex lens 1234 may be a lens with an emergent surface protruding toward a direction close to the light receiver 1232 and an incident surface being a plane (see FIGS. 4, 5, 6 and 10 for details); or a lens with an emergent surface protruding toward a direction close to the light receiver 1232 and an incident surface protruding toward a direction away from the light receiver 1232. The light receiver 1232 and the light emitter 1231 are generally infrared sensors, or laser radars.

The partition 1235 may be in the shape of a plate or other irregular shapes. The partition 1235 is made of an opaque material, thereby preventing the light emitted by the light emitter 1231 from being directly received by the receiver 40 without being reflected by a surface of a region to be operated.

In a specific application, as shown in FIG. 4, the light emitted by the light emitter 1231 is directed into the first convex lens 1233. Most of the light that is not directed to the partition 1235 is converted into approximately parallel light via the first convex lens 1233 and then emergent. Part of the light directed to the partition 1235, i.e., first light, is totally reflected by the first total reflection structure, such that the first light is emergent in a direction approximately parallel to a preset direction. That is, the first light is also converted into approximately parallel light by the first total reflection structure, which reduces the intensity of stray light and increases the intensity of parallel light, such that the intensity of the light reflected by the surface of the region to be operated and then incident on the second convex lens 1234 is also increased. Then, the light is converged by means of the converging effect of the second convex lens 1234 and then directed to the light receiver 1232, such that the light intensity received by the light receiver 1232 is further enhanced. Afterwards, the light receiver 1232 converts a light intensity signal received into an electrical signal and transmits it to a controller. The controller determines the presence of a cliff depending on the magnitude of the value of the electrical signal. That is, if the value of the electrical signal is greater than a preset value, it is determined that a cliff is present; and if the value of the electrical signal is less than or equal to the preset value, it is determined that a cliff is not present.

It can be understood that the incident surface in the present disclosure refers to the surface on which the light is incident; the emergent surface refers to the surface from which the light is emergent; and the surface of the region to be operated refers to the surface of the region where the self-moving device needs to operate. For example, if the self-moving device is a sweeping robot, the surface of the region to be operated is a ground or carpet surface.

In this embodiment, part of the light directed to the partition 1235 in the first convex lens 1233 is totally reflected by means of the first total reflection structure of the first convex lens 1233, such that the part of the light directed to the partition 1235 in the first convex lens 1233 is converted into approximately parallel light and then emergent. In this way, the intensity of stray light is reduced and the intensity of parallel light is increased, thereby avoiding the following situation: after the light emitted by the light emitter 1231 enters the first convex lens 1233, part of the light is directed to a joint interface between the first convex lens 1233 and the partition 1235, and after this part of the light is reflected by the joint interface, it is emergent from the first convex lens 1233 in a direction away from the light receiver 1232 and becomes stray light that will not be received by the light receiver 1232 even if it is reflected by the surface of the region to be operated, resulting in reduced intensity of the light received by the light receiver 1232. Consequently, the intensity of the light reflected by the surface to be operated and received by the light receiver 1232 is increased, the misjudgment rate of the cliff sensor is reduced, and the sensing accuracy of the cliff sensor is improved. When the region to be operated is a dark object (such as a dark carpet), the light receiver 1232 may also receive a relatively strong light signal, such that the influence of color on the cliff sensor is also reduced.

Further, as shown in FIGS. 4, 5, 6 and 10, the first total reflection structure includes a first inclined surface 12331, which is located in a region of the first convex lens 1233 close to the partition 1235. The first inclined surface 12331 gradually inclines away from the partition 1235 from a first end to a second end. The first end is an end of the first inclined surface 12331 away from the light emitter 1231. The second end is an end of the first inclined surface 12331 close to the light emitter 1231.

In this embodiment, the first inclined surface 12331 gradually inclines from the first end to the second end in a direction away from the partition 1235, such that the distance between the first inclined surface 12331 and the partition 1235 gradually increases from the first end to the second end. That is, the gap between the first inclined surface 12331 and the partition 1235 gradually increases from the first end to the second end, such that a medium on one side of the first inclined surface 12331 is the material i.e., an optically denser medium, of the first convex lens 1233, and a medium on the other side is air, i.e., an optically rarer medium. In this way, the first inclined surface 12331 becomes a total reflection surface, which enables total reflection of the first light.

Further, as shown in FIGS. 4, 5, 6 and 10, a second total reflection structure is provided on a portion of the second convex lens 1234 close to the partition 1235. The second total reflection structure is configured to totally reflect second light such that the second light is received by the light receiver 1232. The second light is part of light that is emergent from the first convex lens 1233, reflected by the surface to be operated into the second convex lens 1234 and directed to the partition 1235.

In some implementations, part of the light emergent from the first convex lens 1233 and reflected by the surface to be operated into the second convex lens 1234 is directed to a joint interface between the second convex lens 1234 and the partition 1235. These light rays are reflected by the joint interface and change their original light paths. In this way, these light rays cannot be received by the light receiver 1232 after being emergent from the second convex lens 1234, such that the intensity of the light received by the light receiver 1232 is reduced to a certain extent.

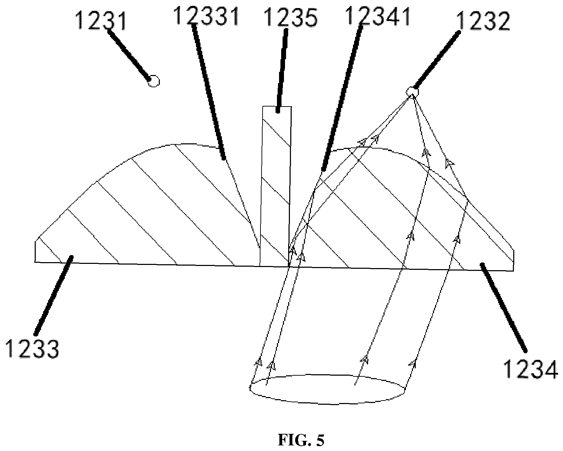

In this embodiment, as shown in FIG. 5, the second light is totally reflected by means of the second total reflection structure of the second convex lens 1234, such that after the second light is emergent from the second convex lens 1234, it can still be received by the light receiver 1232, such that the intensity of the light received by the light receiver 1232 is improved.

Further, as shown in FIGS. 4, 5, 6 and 10, the second total reflection structure includes a second inclined surface 12341, which is located in a region on the emergent surface of the second convex lens 1234 close to the partition 1235. The second inclined surface 12341 gradually inclines away from the partition 1235 from a third end to a fourth end. The third end is an end of the second inclined surface 12341 away from the light receiver 1232. The fourth end is an end of the second inclined surface 12341 close to the light receiver 1232.

In this embodiment, the second inclined surface 12341 gradually inclines from the third end to the fourth end in a direction away from the partition 1235, such that the distance between the second inclined surface 12341 and the partition 1235 gradually increases from the third end to the fourth end. That is, the gap between the second inclined surface 12341 and the partition 1235 gradually increases from the third end to the fourth end, such that a medium on one side of the second inclined surface 12341 is the material, i.e., an optically denser medium, of the second convex lens 1234, and a medium on the other side is air, i.e., an optically rarer medium. In this way, the second inclined surface 12341 becomes a total reflection surface, which enables total reflection of the second light.

Further, as shown in FIGS. 6 and 10, the cliff sensor includes a housing 1239. An accommodating chamber 1236 is provided in the housing 1239, and the light emitter 1231, the light receiver 1232 and the partition 1235 are all arranged in the accommodating chamber 1236. The first convex lens 1233 and the second convex lens 1234 are mounted on a bearing wall surface 12393 of the housing 1239, and the bearing wall surface 12393 is a light-transmitting wall surface. The bearing wall surface 12393 is a wall surface of the housing 1239 which directly faces the emitted light of the light emitter 1231 and through which the incident light of the light receiver 1232 passes.

The housing 1239 may have any shape, for example, a cube, a cylinder, etc., which is not strictly limited in this embodiment. The housing 1239 may protect the light emitter 1231 and the light receiver 1232 to increase the service life of the cliff sensor. Moreover, the bearing wall surface 12393 is a light-transmitting wall surface, which avoids blocking the light emergent from the first convex lens 1233 and the light incident into the second convex lens 1234. Other parts of the housing 1239 may be light-transmitting or not. A light-transmitting wall may be made of transparent or translucent materials, for example, transparent plastic, etc. Further, in some preferred embodiments, the incident surface of the first convex lens 1233 protrudes toward a direction close to the light emitter 1231, and the emergent surface of the first convex lens 1233 is a plane. The emergent surface of the second convex lens 1234 protrudes toward a direction close to the light receiver 1232, and the incident surface of the second convex lens 1234 is a plane. In this way, the first convex lens 1233 and the second convex lens 1234 are both located in the accommodating chamber 1236, such that the housing protects the first convex lens 1233 and the second convex lens 1234, and prevents the first convex lens 1233 and the second convex lens 1234 from being worn by external objects. For the convenience of processing and installation, the partition 1235 and the housing 1239 are integrally formed. Of course, the partition 1235 and the housing 1239 may also be made separately and then assembled.

Further, the incident surface of the first convex lens 1233 protrudes toward the direction close to the light emitter 1231, and the emergent surface of the first convex lens 1233 is a plane. The emergent surface of the second convex lens 1234 protrudes toward the direction of the light receiver 1232, and the incident surface of the second convex lens 1234 is a plane.

The incident surface of the first convex lens 1233 protrudes toward the direction close to the light emitter 1231 to allow the first convex lens 1233 to be located in the accommodating chamber 1236, such that the first convex lens 1233 can be protected by the housing to prevent external objects from causing wear on the incident surface of the first convex lens 1233. The emergent surface of the first convex lens 1233 is a plane, such that the contact area between the first convex lens 1233 and the side wall of the housing 1239 can be increased, thereby firming the connection between the first convex lens 1233 and the side wall of the housing 1239.

Similarly, the emergent surface of the second convex lens 1234 protrudes in the direction close to the light receiver 1232 to allow the second convex lens 1234 to be located in the accommodating chamber 1236, such that the second convex lens 1234 can be protected by the housing to prevent external objects from causing wear on the incident surface of the second convex lens 1234. The incident surface of the second convex lens 1234 is a plane, such that the contact area between the second convex lens 1234 and the side wall of the housing 1239 can be increased, thereby firming the connection between the second convex lens 1234 and the side wall of the housing 1239.

Further, as shown in FIGS. 6, 7 and 10, a connector 1237 for external connection is further provided in the accommodating chamber 1236. The connector 1237 is connected to the light emitter 1231 and the light receiver 1232 respectively.

The connector 1237 is configured to enable the connection of the light emitter 1231 and the light receiver 1232 to an external apparatus (such as a controller).

In some embodiments, as shown in FIGS. 6 and 10, the housing 1239 includes a first shell 12391 and a second shell 12392 connected to the first shell 12391, such that the accommodating chamber 1236 is also divided into two chambers, namely a first chamber 12361 arranged in the first shell 12391 and a second chamber 12362 arranged in the second shell 12392. The first convex lens 1233, the second convex lens 1234, the partition 1235, the light receiver 1232 and the light emitter 1231 are located in the first chamber 12361. The connector 1237 is located in the second chamber 12362. In this way, each component has a corresponding installation region, thereby making the arrangement of each component more reasonable.

The first shell 12391 and the second shell 12392 may be connected in a fixed manner or a detachable manner. The fixed connection is a connection method such as gluing. The detachable connection is a connection method such as snaps and bolts.

Further, as shown in FIGS. 6, 7 and 10, the second shell 12392 includes a first sub-shell 123921 and a second sub-shell 123922. The first sub-shell 123921 and the second sub-shell 123922 are snap-fitted to form the second chamber 12362. The first sub-shell 123921 and the second sub-shell 123922 may be connected in a detachable connection manner, such as snaps, so as to facilitate the installation of the connector 1237 in the second chamber 12362. Of course, the first sub-shell 123921 and the second sub-shell 123922 may also be connected in a fixed connection manner such as gluing.

In a specific application, the connector 1237 may be disposed in the accommodating chamber 1236 in two modes as follows.

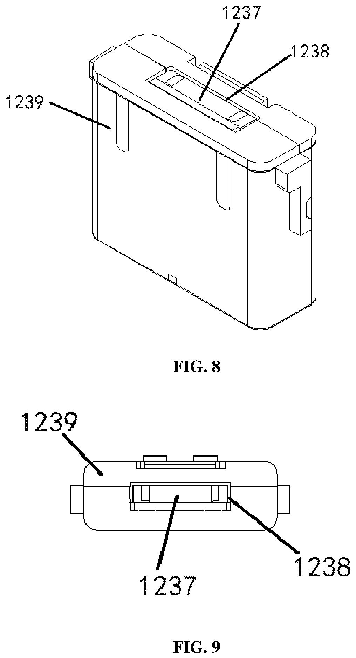

In a first mode, as shown in FIGS. 6 to 9, the housing 1239 is further provided with a first opening 1238 at a position corresponding to a plug-in end of the connector, the connector 1237 is located at the first opening 1238, and an outer edge of the connector 1237 is flush with an edge of the first opening 1238.

The connector 1237 is located at the first opening 1238, such that after the connecting component of the external apparatus is inserted into the first opening 1238, the connector 1237 can be connected to the connecting component of the external apparatus; or the connecting component of the external apparatus can be pulled out from the first opening 1238 to disconnect the connector 1237 from the connecting component of the external apparatus, thereby facilitating the use of the cliff sensor.

In a case where the housing 1239 is divided into the first shell 12391 and the second shell 12392, the first opening 1238 is located on the second shell 12392 and on the side wall opposite to the first convex lens 1233 and the second convex lens 1234, thereby facilitating the plugging-in of the connector 1237 with the connecting component of the external apparatus.

The outer edge of the connector 1237 is flush with the edge of the first opening 1238. That is, the connector 1237 is as close to the edge of the first opening 1238 as possible, such that the connector 1237 can come into full contact with the connecting component of the external apparatus, thereby improving the stability of the connection and avoiding the problem of disconnection failure that easily occurs due to small contact between the connector 1237 and the connecting component of the external apparatus.

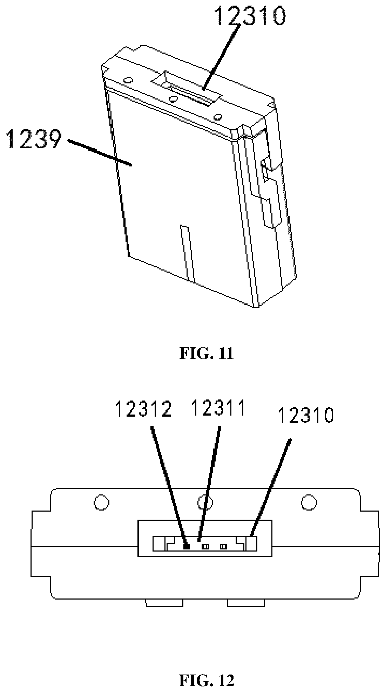

In a second mode, as shown in FIGS. 11 and 12, a connecting wire 12312 is provided on the connector 1237, and a second opening 12310 is provided on the housing 1239 at a position corresponding to the connection between the connector 1237 and the connecting wire 12312. The connecting wire 12312 passes through the second opening 12310, and a blocking member 12311 is provided at the second opening 12310 to seal the second opening 12310.

In a case where the housing 1239 is divided into the first shell 12391 and the second shell 12392, the second opening 12310 is located on the second shell 12392 and on the side wall opposite to the first convex lens 1233 and the second convex lens 1234, thereby facilitating the plugging-in of the connector 1237 with the connecting component of the external apparatus.

The blocking member 12311 may be made of a soft rubber material, for example, thermoplastic polyurethane elastomer rubber or thermoplastic elastomer, etc. The blocking member 12311 and the first sub-shell 123921 or the second sub-shell 123922 of the second shell 12392 may be in an integral structure. The blocking member 12311 and the first sub-shell 123921 or the second sub-shell 123922 of the second shell 12392 are made of different materials. The blocking member 12311 and the housing 1239 are molded by secondary injection molding. Of course, the blocking member 12311 and the first sub-shell 123921 or the second sub-shell 123922 may also be in a split structure. After the blocking member is separately injection-molded, it is fixedly connected to the first sub-shell 123921 or the second sub-shell 123922 by means of, for example, gluing or hot melting. This facilitates replacement of the blocking member 12311 when the sealing performance of the blocking member 12311 decreases due to long-term use.

The sealing of the second opening 12310 by the blocking member 12311 improves the overall airtightness of the cliff sensor, thereby preventing the service life of the cliff sensor from being reduced due to the fact that dust or moisture from the external environment enter the accommodating chamber 1236 to result in rustiness and corrosion of the connector 1237. In order to ensure the successful connection between the cliff sensor and the external component, the connecting wire 12312 extends out of the second opening 12310, such that the connector 1237 is connected to the connecting component of the external apparatus through the connecting wire 12312 extending out of the second opening 12310.

In a second aspect, an embodiment of the present disclosure provides a self-moving device. The self-moving device includes a body and the above-mentioned cliff sensor. The cliff sensor is arranged at the bottom of the body.

For the specific structure of the cliff sensor in this embodiment, reference may be made to the above embodiments. Since the self-moving device is based on all the technical solutions of all the above embodiments, it at least has all the beneficial effects brought by the technical solutions of the above embodiments, which will not be repeated one by one here.

The self-moving device of this embodiment may automatically move in a region to be cleaned and automatically perform operations. The self-moving device may be a cleaning robot, such as a sweeping robot 10, a mopping robot, a floor polishing robot or a weeding robot. For ease of description, this embodiment describes the technical solution of the present disclosure by taking the sweeping robot 10 as an example.

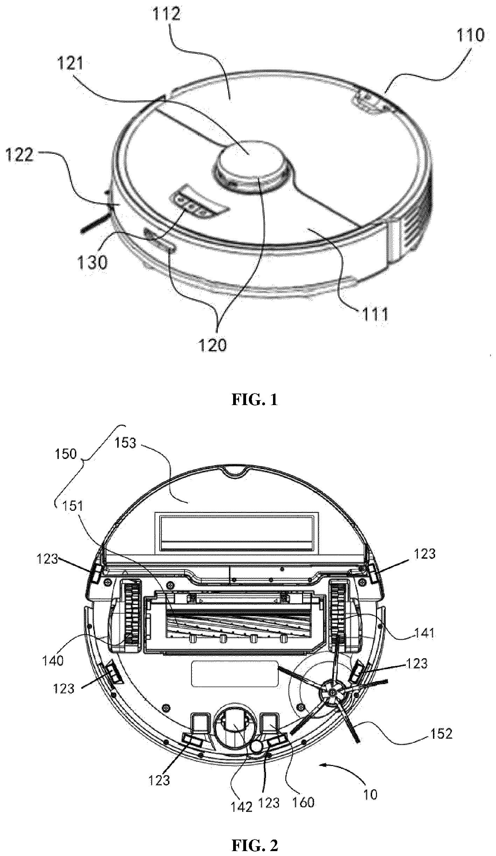

Further, as shown in FIGS. 1 and 2, the sweeping robot 10 may include a machine body 110, a perception module 120, a controller, a drive module, a cleaning system 150, an energy system, and a human-machine interaction module 130. As shown in FIG. 1, the machine body 110 includes a forward portion 111 and a rearward portion 112, and has an approximately circular shape (circular in front and back) or other shapes, including but not limited to an approximately D-shape with a square front and a circular back, and a rectangular or square shape being square in front and back.

As shown in FIGS. 1 and 2, the perception module 120 includes a position determination means 121 located on the machine body 110, a collision sensor arranged on a front collision structure 122 of the forward portion 111 of the machine body 110, a short-distance sensor (wall sensor) located on the side of the machine, a cliff sensor 123 arranged at the lower part of the machine body 110, as well as a magnetometer, an accelerometer, a gyroscope, an odometer and other sensing means arranged inside the machine body 110 and configured to provide the controller with various position information and motion state information of the machine. The position determination means 121 includes but is not limited to a camera and a laser distance sensor (LDS). In some preferred implementations, the position determination means 121 (such as a camera or a laser sensor) is located on the front side of the body 110, i.e., the frontmost end of the forward portion 111, so as to enable more accurate sensing of the environment in front of the cleaning robot and achieve precise positioning.

As shown in FIG. 1, the forward portion 111 of the machine body 110 can bear the front collision structure 122. During the cleaning process, when a drive wheel module 141 propels the cleaning robot 10 to walk on the ground, the front collision structure 122 detects one or more events in the traveling path of the cleaning robot 10 via the sensor system arranged thereon, for example, the collision sensor or proximity sensor (infrared sensor). Based on the event (for example, an obstacle or a wall) detected by the front collision structure 122, the drive module can be controlled to enable the cleaning robot 10 to respond to the event by, for example, performing an obstacle avoidance operation to move away from the obstacle.

The controller is arranged on a circuit board in the machine body 110, and includes a computing processor, for example, a central processing unit or an application processor, which communicates with a non-transient memory, for example, a hard disk, a flash memory or a random access memory. The application processor draws a simultaneous map of the environment where the cleaning robot 10 is located using a localization algorithm (for example, simultaneous localization and mapping, SLAM) according to the obstacle information fed back by the laser distance sensor. In addition, the current working state and position of the cleaning robot 10 as well as the current posture (for example, crossing a threshold, crawling onto a carpet, being at the cliff, the upper or lower part being stuck, the dust box being full, the dust box being picked up, etc.) of the cleaning robot 10 are comprehensively determined by combining the distance information and speed information fed back by the sensor provided on the front collision structure 122, the cliff sensor 123, the magnetometer, the accelerometer, the gyroscope, the odometer, and other sensing means, and moreover, specific next action strategies may be given for different situations, so as to enable the cleaning robot 10 to achieve a better cleaning performance and provide better user experience.

As shown in FIG. 2, the drive module may manipulate the machine body 110 to travel across the ground based on a drive command with distance and angle information. The drive module includes a main drive wheel module, which may control a left wheel 140 and a right wheel 141. In order to more accurately control the movement of the machine, the main drive wheel module preferably includes a left drive wheel module and a right drive wheel module respectively. The left and right drive wheel modules are arranged along a transverse axis defined by the machine body 110. In order to enable the cleaning robot 10 to move more stably or achieve stronger movement performance on the ground, the cleaning robot 10 may include one or more driven wheels 142, which include but are not limited to universal wheels. The main drive wheel module includes a drive motor and a control circuit that controls the drive motor, and the main drive wheel module may also be connected to a circuit and an odometer that meter a drive current. Moreover, the left wheel 140 and the right wheel 141 may have a biased drop suspension system, which is fastened in a movable manner (for example, attached to the machine body 110 in a rotatable manner) and receives a spring bias that is biased downward and away from the machine body 110. The spring bias allows the drive wheels to maintain contact and traction with the ground with a certain landing force, while the cleaning elements of the cleaning robot 10 also contact the ground with a certain pressure.

The energy system includes rechargeable batteries, for example nickel-metal hydride batteries and lithium batteries. The rechargeable batteries may be connected to a charging control circuit, a battery pack charging temperature detection circuit, and a battery undervoltage monitoring circuit, which are then connected to a single-chip microcomputer control circuit. The machine body is charged by connecting to a charging pile through a charging electrode 160 disposed on the side or underside of the body.

The human-machine interaction module 130 includes buttons on the panel of the machine body for a user to select functions. The human-machine interaction module may further include a display screen and/or indicator lights and/or speakers, which display(s) the current mode of the machine or the function selection items to the user. The human-machine interaction module may further include a mobile phone client program. For the path-navigation-type automatic cleaning robot 10, a mobile phone client may show the user a map of the environment where the cleaning robot is located, as well as the location of the cleaning robot, and may provide the user with more abundant and humanized function items. Specifically, the cleaning robot has multiple modes, for example, a working mode, a self-cleaning mode, etc. The working mode refers to a mode in which the cleaning robot performs automatic cleaning operations, and the self-cleaning mode refers to a mode in which the cleaning robot removes dirt from a roller brush and a side brush 152 on a base, and automatically collects dirt, and/or automatically washes and dries a mop.

The cleaning system 150 may be a dry cleaning system 151 and/or a wet cleaning system 153.

As shown in FIG. 2, the dry cleaning system 151 provided in the embodiment of the present disclosure may include a roller brush, a dust box, a fan, and an air outlet. The roller brush that has a certain interference with the ground sweeps up the garbage on the ground and rolls it to the front of a dust suction port between the roller brush and the dust box, and the garbage is then sucked into the dust box by a suction gas generated by the fan and passing through the dust box. The dry cleaning system 151 may further include a side brush 152 with a rotating shaft, and the rotating shaft is at a certain angle relative to the ground to move debris into a roller brush region of the cleaning system 150.

As shown in FIGS. 2 and 3, the wet cleaning system 153 provided in the embodiment of the present disclosure may include a cleaning head 1531, a drive unit 1532, a water supply mechanism, a liquid storage tank, etc. The cleaning head 1531 may be arranged below the liquid storage tank, and a cleaning liquid inside the liquid storage tank is conveyed to the cleaning head 1531 through the water supply mechanism, such that the cleaning head 1531 performs wet cleaning on a surface to be cleaned. In other embodiments of the present disclosure, the cleaning liquid inside the liquid storage tank may also be directly sprayed onto the surface to be cleaned, and the cleaning head 1531 evenly applies the cleaning liquid to clean the surface.

The cleaning head 1531 is configured to clean the surface to be cleaned, and the drive unit 1532 is configured to drive the cleaning head 1531 to reciprocate along a target surface, which is a part of the surface to be cleaned. The cleaning head 1531 reciprocates along the surface to be cleaned, and a mop is provided on a surface of the cleaning head 1531 in contact with the surface to be cleaned. The mop of the cleaning head 1531 is driven by the drive unit 1532 to reciprocate to produce high-frequency friction with the surface to be cleaned, thereby removing stains on the surface to be cleaned; or the mop may be arranged to float and always keep in contact with the surface to be cleaned during the cleaning process, without the need for the drive unit 1532 to drive its reciprocating motion.

As shown in FIG. 3, the drive unit 1532 may further include a drive platform 1533 and a support platform 1534. The drive platform 1533 is connected to a bottom surface of the machine body 110 to provide a drive force. The support platform 1534 is detachably connected to the drive platform 1533 to support the cleaning head 1531 and can be raised and lowered under the drive of the drive platform 1533.

The wet cleaning system 153 may be connected to the machine body 110 through an active lifting module. When the wet cleaning system 153 is not temporarily involved in the work, for example, the cleaning robot 10 stops at the base station to clean the cleaning head 1531 of the wet cleaning system 153 and fill the liquid storage tank with water; or when encountering a surface to be cleaned that cannot be cleaned by the wet cleaning system 153, the wet cleaning system 153 is raised through the active lifting module.

The present disclosure has been described through the above-mentioned embodiments. It should be understood that the above-mentioned embodiments are only for the purpose of example and description, and are not intended to limit the present disclosure to the scope of the described embodiments. In addition, it can be understood by those skilled in the art that the present disclosure is not limited to the above-mentioned embodiments, more variations and modifications can be made according to the teachings of the present disclosure, and these variations and modifications shall fall within the scope of protection claimed by the present disclosure. The scope of protection of the present disclosure is defined by the attached claims and their equivalents.

## Claims

1. A cliff sensor, comprising: a light emitter and a light receiver, wherein
a first convex lens is provided on a light emitting path of the light emitter, and a partition is provided between the light emitter and the light receiver; and
a first total reflection structure is provided on a portion of the first convex lens close to the partition, and the first total reflection structure is configured to totally reflect first light, wherein the first light is a part of light emitted by the light emitter and directed to the partition in the first convex lens.

2. The cliff sensor according to claim 1, wherein a second convex lens is provided on a light receiving path of the light receiver.

3. The cliff sensor according to claim 2, wherein a second total reflection structure is provided on a portion of the second convex lens close to the partition, and the second total reflection structure is configured to totally reflect second light such that the second light is received by the light receiver, wherein the second light is a part of light that is emitted from the first convex lens, reflected by a surface to be operated into the second convex lens and directed to the partition.

4. The cliff sensor according to claim 1, wherein the first total reflection structure comprises a first inclined surface located on a region of the first convex lens close to the partition, the first inclined surface gradually inclines along a direction away from the partition from a first end of the first inclined surface to a second end of the first inclined surface, the first end is an end of the first inclined surface away from the light emitter, and the second end is an end of the first inclined surface close to the light emitter.

5. The cliff sensor according to claim 3, wherein the second total reflection structure comprises a second inclined surface located on a region of an emergent surface of the second convex lens close to the partition, the second inclined surface gradually inclines along a direction away from the partition from a third end of the second inclined surface to a fourth end of the second inclined surface, the third end is an end of the second inclined surface away from the light receiver, and the fourth end is an end of the second inclined surface close to the light receiver.

6. The cliff sensor according to claim 2, wherein the cliff sensor comprises a housing, an accommodating chamber is provided in the housing, and the light emitter, the light receiver and the partition are all arranged in the accommodating chamber; and
the first convex lens and the second convex lens are mounted on a bearing wall surface of the housing, and the bearing wall surface is a light-transmitting wall surface, wherein the bearing wall surface is a wall surface of the housing that directly faces light emitted by the light emitter and through which incident light of the light receiver passes.

7. The cliff sensor according to claim 6, wherein an incident surface of the first convex lens protrudes toward a direction close to the light emitter, and an emergent surface of the first convex lens is a plane; and the emergent surface of the second convex lens protrudes toward a direction of the light receiver, and an incident surface of the second convex lens is a plane.

8. The cliff sensor according to claim 6, wherein a connector for external connection is further provided in the accommodating chamber, and the connector is connected to the light emitter and the light receiver respectively.

9. The cliff sensor according to claim 8, wherein a first opening is further defined on the housing at a position corresponding to a plug-in end of the connector, the connector is located at the first opening, and an outer edge of the connector is flush with an edge of the first opening.

10. The cliff sensor according to claim 8, wherein the connector is provided with a connecting wire, a second opening is defined on the housing at a position where the connector is connected to the connecting wire, the connecting wire passes through the second opening, and a blocking member is provided at the second opening to seal the second opening.

11. The cliff sensor according to claim 8, wherein the housing comprises a first shell and a second shell connected to the first shell, such that the accommodating chamber comprises a first chamber arranged in the first shell and a second chamber arranged in the second shell, the first convex lens, the second convex lens, the partition, the light receiver and the light emitter are located in the first chamber, and the connector is located in the second chamber.

12. The cliff sensor according to claim 11, wherein the first shell and the second shell are connected in a fixed or detachable manner.

13. The cliff sensor according to claim 12, wherein the second shell comprises a first sub-shell and a second sub-shell, and the first sub-shell and the second sub-shell are snap-fitted to form the second chamber.

14. The cliff sensor according to claim 10, wherein the blocking member is made of soft rubber material.

15. A self-moving device, comprising a body and the cliff sensor according to claims 1-14, wherein the cliff sensor is arranged at a bottom of the body.
